# EUROPÄISCHE PATENTSCHRIFT

(11) **EP 1 932 739 B1**
(45) Veröffentlichungstag und Bekanntmachung des Hinweises auf die Patenterteilung: **23.02.2011**
(21) Anmeldenummer: 06126069.1
(22) Anmeldetag: 13.12.2006
(51) Int. Cl.: B60T 17/20, B60T 17/22

(54) **Bremsvorrichtung mit Notbrems- und Notbremsüberbrückungsfunktion**
Braking device with emergency stop and emergency stop bridging function
Dispositif de freinage doté de la fonction de freinage d'urgence et de la fonction de court-circuit du freinage d'urgence

(43) Veröffentlichungstag der Anmeldung: 18.06.2008
(73) Patentinhaber: Schweizerische Bundesbahnen SBB, 3000 Bern 65 (CH)
(72) Erfinder: Marclay, Yves, 3700 Spiez (CH); Baumgartner, Albert, 3400 Burgdorf (CH)
(74) Vertreter: Rutz, Peter

(56) Entgegenhaltungen:
- DE-A1- 3 623 062
- DE-B1- 2 555 363
- DE-C1- 10 209 913
- DE-U1- 20 319 547

## Beschreibung

Die Erfindung betrifft eine Bremsvorrichtung für Personenzüge, die eine Notbremsfunktion und eine Notbremsüberbrückungsfunktion aufweist, nach dem Oberbegriff von Anspruch 1.

Eine Bremsvorrichtung mit elektropneumatischer Bremse (ep-Bremse), einer Notbremsfunktionalität und einer Notbremsüberbrückung ist in [1], Merkblatt 541-5 des Internationalen Eisenbahnverbands (UIC) vom Dezember 2005 (4. Ausgabe), beschrieben.

Gemäss [1] sind die elektropneumatische Bremse und die elektropneumatische Notbremsüberbrückung zwei Systeme, deren jeweilige Wirkungsweise durch ihre Steuerungs- und Überwachungseinrichtungen ineinander übergreifen. Die für die elektropneumatische Bremse und die Überbrückung der Notbremse erforderlichen Einrichtungen sind für Reisezugwagen bestimmt, während Güterwagen nur über die Einrichtungen der elektropneumatischen Bremse verfügen.

In Eisenbahnwagen wird eine Bremsung, gegebenenfalls eine Notbremsung, durch eine Druckabsenkung in der Hauptluftleitung (HLL) der selbsttätigen Bremse gesteuert. Die Betätigung einer Notbremse in einem Reisezugwagen ruft eine Drucksenkung in der Hauptluftleitung auf einen Wert von höchstens 2,0 bar hervor. Das Lösen der Bremse wird durch eine Druckerhöhung in der Hauptluftleitung gesteuert. Die Durchschlagsgeschwindigkeit der Drucksenkungswelle durch den Zug ist begrenzt, weshalb das gleichzeitige Anlegen der Bremsen in den Fahrzeugen nicht möglich ist. Mittels der elektropneumatischen Bremse gelingt es hingegen, die Ansprechzeiten beim Bremsen und Lösen zu minimieren und Bremstätigkeiten längs des gesamten Zuges zu synchronisieren. Hierzu rufen vom Führerbremsventil gesteuerte Magnetventile in jedem Fahrzeug gleichzeitig entweder die Entlüftung oder die Nachspeisung der Hauptluftleitung hervor, um die pneumatische Funktion des Führerbremsventils zu unterstützen.

Im Führerraum werden die elektrischen Brems- und Löseimpulse mit dem Führerbremsventil erzeugt. Die Dauer der elektrischen Impulse hängt von der Stärke des Bremsens und Lösens ab. Diese Impulse werden solange gehalten, wie ein Unterschied zwischen dem erreichten und dem geforderten Druck in der Hauptluftleitung besteht. Die elektrischen Impulse werden über Adern der Leitung durch den Zug übertragen. Jedes Fahrzeug ist mit zwei Magnetventilen ausgerüstet, das eine für das Bremsen und das andere für das Lösen. Sie werden von den elektrischen Brems- und Löseimpulsen gesteuert, die von den entsprechenden Adern übertragen werden. Die Magnetventile sind so kalibriert, dass sie einen genau bestimmten Gradienten ΔP/Δt einhalten. Während des Bremsens und Lösens ist der Druck in der Hauptluftleitung des Zuges praktisch sofort gleich dem geforderten Wert. Beim elektropneumatischen Bremsen soll der Druck in der Hauptluftleitung in einer Zeit von 3,5 bis 5 s von 5 bar auf 3,5 bar abgesenkt werden.

Weiter gemäss [1] können alle Reisenden im Notfall die Notbremse betätigen, um den Zug anzuhalten. Durch die Betätigung eines Notbremszugkastens wird eine Steuerleitung entlüftet, die ein Notbremsventil aktiviert, welches die Hauptluftleitung der selbsttätigen Bremse entlüftet. Der anschliessende Halt des Zuges erfolgt an einer beliebigen Stelle. Dies kann auf den Hochgeschwindigkeitsstrecken, in Tunneln und auf Brücken, ein grosser Nachteil sein. Um diesem Nachteil zu begegnen, wird gemäss [1] eine Notbremsüberbrückung vorgesehen, die dem Fahrzeugführer die Möglichkeit verschafft, die Notbremsung zu überbrücken und einen sinnvollen Ort für den Halt des Zugs zu wählen.

Zusätzlich zur Bremsung, die durch die Funktion des Notbremsventils bei Betätigung einer Notbremse ausgelöst wird, wird dem Fahrzeugführer durch eine optische und akustische Meldeeinrichtung eine Information übertragen. Der Fahrzeugführer kann daraufhin die Überbrückung der Notbremsung in dem oder den betreffenden Reisezugwagen durchführen. Dieser Befehl ist entweder mit der Lösefunktion des Führerbremsventils verbunden (sogenannter Füllstoss), oder er wird durch einen unabhängigen Knopf gesteuert. Der Fahrzeugführer kann so erneut die Hauptluftleitung der selbsttätigen Bremse auffüllen und die Bremse lösen. Wenn der Fahrzeugführer die Überbrückung ausführt, wird ein Impuls auf die für die Meldung verwendete Leitung gesendet. Die Überbrückung besteht darin, an dem Reisezugwagen, in dem die Notbremse gezogen wurde, ein Magnetventil, nachstehend Überbrückungsventil genannt, anzusteuern, das die Entlüftung der Hauptluftleitung der selbsttätigen Bremse unterbricht. Dieser Befehl wird örtlich solange aufrechterhalten, bis der Notbremszugkasten in seine Regelstellung zurückgebracht wurde.

Wie dies in [2], DE 102 09 913 C1 bestätigt ist, ist die Funktionsweise von Notbremseinrichtungen auf der Grundlage von pneumatischen Bremssystemen stets so angelegt, dass das Betätigen eines Notbremsventils oder das Ansprechen einer automatischen Notbremseinrichtung ein sofortiges teilweises oder vollständiges Entlüften der durch den gesamten Zug geführten Hauptluftleitung und damit ein Anlegen der Bremsen zur Folge hat. Obwohl der Fahrzeugführer eine Überbrückung einer unerwünschten Notbremsung in dem oder den betreffenden Reisezugwagen durchführen kann, erfolgt daher eine Abbremsung des Zuges, in Abhängigkeit der vorliegenden Reaktionszeiten und der Zugsgeschwindigkeiten gegebenenfalls bis zu einem vollständigen Halt. Während eines Brandfalls in einem Tunnel könnten bei einem auch nur kurzfristigen Halt punktuell sehr hohe Temperaturen auftreten, welche das pneumatische System schädigen und das erneute Anfahren des Zuges verhindern könnten. Ebenso könnte ein Reisender bei langsamer Zugfahrt oder einem kurzzeitigen Halt, beispielsweise auf einer Brücke, versucht sein, vom Zug auszusteigen. Von grosser Bedeutung ist ferner, dass jede von einem Reisenden eingeleitete missbräuchliche Notbremsung zu einer massiven betrieblichen Störung führt. Auch wenn dies der Fahrzeugführer vermeiden möchte und gegebenenfalls missbräuchliche Betätigungen der Notbremse aufgrund des vorliegenden Transportauftrags erahnt, gelingt es nicht, unerwünschte Einwirkungen auf die Zugfahrt bei missbräuchlichen Notbremseinleitungen zu vermeiden.

Der vorliegenden Erfindung liegt daher die Aufgabe zugrunde, eine Bremsvorrichtung, bei der diese Nachteile vermieden werden.

Insbesondere ist eine gemäss den in [1] angegebenen Bestimmungen arbeitende Bremsvorrichtung anzugeben, die derart erweitert ist, dass die oben beschriebenen Nachteile vermieden werden.

Die erfindungsgemässe Erweiterung einer gemäss den in [1] angegebenen Bestimmungen arbeitende Bremsvorrichtung soll dabei mit minimalem Aufwand möglich sein.

Erfindungsgemäss ausgestaltete Einheiten eines Personenzuges sollen dabei kompatibel zu konventionellen Zugseinheiten sein, die in gemäss den in [1] angegebenen Bestimmungen arbeiten, so dass konventionelle und erfindungsgemäss ausgerüstete Zugseinheiten nach wie vor zu Zugskompositionen zusammengesetzt werden können.

Diese Aufgabe wird mit einer Bremsvorrichtung gelöst, welche die in Anspruch 1 angegebenen Merkmale aufweist. Vorteilhafte Ausgestaltungen der Erfindung sind in weiteren Ansprüchen angegeben.

Die für einen Personenzug vorgesehene Bremsvorrichtung ist mit einer elektropneumatischen Ausrüstung, einschliesslich einer mit Bremseinheiten gekoppelten Hauptluftleitung ausgerüstet, wobei im Trieb-/ oder Steuerwagen, eine Steuereinheit und in wenigstens einem mit dem Trieb-/ oder Steuerwagen gekoppelten Reisezugwagen ein Notbremszugkasten bzw. eine Notbremseinheit vorgesehen ist, die einen manuell betätigbaren, über elektrische Leitungen mit der Steuereinheit verbundenen Auslöseschalter und wenigstens ein damit gekoppeltes Auslöseventil aufweist, das über eine pneumatische Steuerleitung und ein Überbrückungsventil mit wenigstens einem an die Hauptluftleitung angeschlossenen ersten Notbremsventil verbunden ist. Das Überbrückungsventil, mittels dessen die Steuerleitung verschlossen und das manuell betätigbare Auslöseventil somit deaktiviert werden kann, ist von der Steuereinheit über einen ersten Signalpfad ansteuerbar, so dass es nach der Signalisierung der Betätigung des Auslöseschalters, beispielsweise auf einer Signaleinheit der Steuereinheit, durch Betätigung eines ersten Überbrückungsschalters in der Steuereinheit wahlweise verschliessbar ist. Mit dieser soweit gemäss [1] ausgestalteten Bremsvorrichtung kann eine eingeleitete Notbremsung, die bereits auf den Personenzug eingewirkt hat, wieder aufgehoben werden.

Erfindungsgemäss ist das Überbrückungsventil von der mit einem Magnetventil zur Schnellbremsung verbundenen Steuereinheit zusätzlich mittels eines zweiten Überbrückungsschalters über einen zweiten Signalpfad ansteuerbar, so dass das Überbrückungsventil für feste oder variable Verschlussintervalle verschliessbar ist, während derer der Auslöseschalter durch die Steuereinheit überwachbar und das mit der Hauptluftleitung verbundene Magnetventil zur Schnellbremsung zur Schnellbremsung aktivierbar ist, falls nach Betätigung des Auslöseschalters nicht innerhalb eines vorgegebenen Intervalls eine Eingabe durch den Fahrzeugführer erfolgt, gegebenenfalls der der erste Überbrückungsschalter betätigt wird, oder falls nicht anderweitige Instruktionen in der Steuereinheit programmiert sind.

Durch die erfindungsgemässen Massnahmen kann die zum ersten Notbremsventil führende pneumatische Steuerleitung somit wahlweise verschlossen werden, so dass die Betätigung der Notbremse in einem Reisezugwagen bzw. die Betätigung des Auslöseventils nicht zu einer Öffnung der pneumatischen Steuerleitung und somit nicht zu einer Betätigung des ersten Notbremsventils führt. Das Betätigen der Notbremseinheit wird von der Steuereinheit jedoch trotzdem überwacht und dem Fahrzeugführer signalisiert, der die Notbremssignalisierung innerhalb eines vorgegebenen Intervalls quittieren und dadurch die Einleitung einer Notbremsung durch die Steuereinheit verhindern kann. Sofern die Notbremssignalisierung durch den Fahrzeugführer hingegen nicht quittiert wird, leitet die Steuereinheit eine Notbremsung ein, indem das vorzugsweise im Trieb-/ oder Steuerwagen vorgesehene Magnetventil zur Schnellbremsung betätigt wird, um die Luft aus der Hauptluftleitung und den Bremszylindern entweichen zu lassen. Alternativ können der Steuereinheit für bestimmte Streckenbereiche jedoch bereits Instruktionen vorliegen, gemäss denen keine Notbremsung einzuleiten ist. Sofern der Personenzug sich beispielsweise in einem Tunnel befindet, kann dies durch die Steuereinheit beispielsweise anhand der Fahrtdaten und Streckendaten ermittelt werden. Sofern der Fahrzeugführer oder der Zugbetreiber, beispielsweise ein Leitwerk, vorgesehen hat, dass beispielsweise in einem Tunnel generell keine Notbremsung durchgeführt werden soll, kann dies in der Steuereinheit eingegeben bzw. programmiert werden.

Die ursprünglich vorhandene Sicherheit bleibt demzufolge gewährleistet und wird durch die erfindungsgemässen Massnahmen dahingehend erhöht, dass unerwünschte Notbremseinleitungen, die zu Gefährdungen oder zumindest zu Störungen des Fahrbetriebs führen können, konsequent vermieden werden. Für wählbare Zeitperioden bzw. Verschlussperioden kann der Fahrzeugführer oder generell der Zugbetreiber, beispielsweise ein Leitwerk, unabhängig davon, ob bereits Notbremseinleitungen vorliegen, die vollständige Kontrolle über das Notbremssystem übernehmen. In diesen Zeitperioden kann der Reisende die Notbremse betätigen und eine Notbremsanforderung an den Trieb-/ oder Steuerwagen signalisieren, ohne dass diese Notbremsanforderung unmittelbar die Einleitung einer Notbremsung zur Folge hat.

Eine erfindungsgemässe Ansteuerung des Überbrückungsventils, zum Verschliessen desselben, erfolgt beispielsweise ausserhalb der Haltebereiche, vorzugsweise in einem Abstand von etwa 100m-200m von den fahrplangemässen Haltepunkten des Personenzuges entfernt, im Bereich eines Tunnels und/oder im Bereich einer Brücke vorzugsweise automatisch. Im Bahnhofbereich wird das Überbrückungsventil vorzugsweise nicht verschlossen, damit von Reisenden eingeleitete Notbremsungen sofort ausgeführt werden und vom Fahrzeugführer nur gemäss den in [1] definierten Bestimmungen bzw. durch Betätigung des ersten Überbrückungsschalters aufgehoben werden können. Dadurch wird gewährleistet, dass auf Notfälle, die innerhalb des Stationsbereichs auftreten können, auch durch Reisende unmittelbar reagiert werden kann. Ausserhalb des Stationsbereichs, insbesondere auf anspruchsvollen Strecken mit Brücken und Tunnels verfügt der Reisende normalerweise nicht über alle Informationen, die für die Einleitung einer Notbremsung wesentlich sind. In solchen Streckenbereichen, typischerweise ausserhalb der Stationsbereiche, ist es sinnvoller, wenn die Entscheidung zur Einleitung einer Notbremsung an den Fahrzeugführer oder an die Fahrzeugsteuerung übertragen wird. Die Verschlussintervalle, innerhalb derer das Überbrückungsventil erfindungsgemäss verschlossen wird, können fest vorgegeben, durch den Fahrzeugführer gegebenenfalls mit wählbarer Priorität eingestellt oder anhand externer Ereignisse und Informationen festgelegt werden. Beispielsweise kann ein Fahrzeugführer auch für einen Stationsbereich festlegen, dass das Überbrückungsventil erfindungsgemäss verschlossen wird, um beispielsweise missbräuchliche Betätigungen der Notbremse zu verhindern, die bei entsprechenden Transportaufträgen zu erwarten sind. Ferner kann einem Personenzug aufgrund eines Unfalls der Halt in einem Bahnhof untersagt werden. Um die erwartete Betätigung der Notbremsen durch Reisende zu verhindern, kann dem Trieb-/ oder Steuerwagen bei der Einfahrt in den Bahnhof über eine Balise die Instruktion übertragen werden, das Überbrückungsventil erfindungsgemäss zu sperren und bei Betätigung der Notbremsung durch einen Reisenden selbst dann auf die Einleitung einer Notbremsung zu verzichten, wenn der Fahrzeugführer die Notbremsung nicht innerhalb des Verschlussintervalls quittiert.

Ein der erfindungsgemässen Steuerung des Überbrückungsventils dienendes Verschlusssignal kann auf verschiedene Weise gesetzt und über den zweiten Signalpfad übertragen und wieder aufgehoben werden. Das Verschlusssignal oder eine entsprechende Spannung, normalerweise eine Gleichspannung, kann durch manuelle Betätigung des zweiten Überbrückungsschalters gesetzt werden. Das Verschlusssignal kann von der Steuereinheit in Abhängigkeit von vorliegenden, gegebenenfalls programmierten, oder selbst ermittelten Informationen, wie historischen Fahrtinformationen, Zeitinformationen, Positionsdaten und Positionsinstruktionen, und/oder in Abhängigkeit von externen, Informationen gesetzt werden, die gegebenenfalls von stationären Kommunikationseinheiten, wie Balisen, empfangen wurden.

In einer vorzugsweisen Ausgestaltung der Erfindung ist die Ventilspule des Überbrückungsventils über einen dem ersten Signalpfad zugeordneten ersten Ventilschalter und über einen dem zweiten Signalpfad zugeordneten zweiten Ventilschalter mit einer Versorgungsspannung, vorzugsweise mit der Wagenbatterie verbindbar.

Der erste Ventilschalter ist dabei mittels eines Empfangsrelais betätigbar, dessen Relaisspule über eine erste und eine zweite Ader einer durch den Personenzug geführten Verbindungsleitung mittels des ersten Überbrückungsschalters ansteuerbar.

Der zweite Ventilschalter ist mittels eines Überbrückungsrelais betätigbar, dessen Relaisspule über eine dritte und eine vierte Ader der Verbindungsleitung mittels des zweiten Überbrückungsschalters ansteuerbar ist.

Um die Kompatibilität mit konventionellen Zugswagen zu gewährleisten, wird als Verbindungsleitung vorzugsweise die in [1] spezifizierte mehradrige Verbindungsleitung gewählt, welche die Wagen des Personenzuges miteinander verbindet. Über die Ader A dieser Verbindungsleitung, die der Stromversorgung von Güterwagen dient und die für Personenzüge ansonsten nicht verwendet wird, wird vorzugsweise das Verschlusssignal übertragen.

Die erste Ader der erfindungsgemässen Verbindungsleitung ist vorzugsweise die Ader 4 (ep-Bremse anlegen); die zweite Ader der erfindungsgemässen Verbindungsleitung ist vorzugsweise die Ader D (NBÜ-Funktionen); die dritte Ader der erfindungsgemässen Verbindungsleitung ist vorzugsweise die Ader A (Ansteuerung NBÜ über den zweiten Signalpfad) und die vierte Ader der Verbindungsleitung ist vorzugsweise die Ader 2 (Rückleitung ep-Bremse und NBÜ) der in [1] spezifizierten mehradrigen Verbindungsleitung. Ein erfindungsgemäss ausgestaltetes Fahrzeug ist daher vollständig kompatibel zu einem gemäss [1] eingerichteten Fahrzeug, wobei durch Nutzung der Ader A der in [1] spezifizierten mehradrigen Verbindungsleitung die Zusatzfunktionalitäten vorteilhaft realisierbar sind.

In einer weiteren vorzugsweisen Ausgestaltung der Erfindung sind die erste und die zweite Ader der Verbindungsleitung durch eine Serieschaltung des Auslöseschalters und eines Lastwiderstands miteinander verbunden. Durch Betätigung des Auslöseschalters wird der Lastwiderstand an die beiden Adern angelegt, wonach die Steuereinheit die entsprechende Impedanzänderung detektieren und instruktionsgemäss verwerten kann. Beispielsweise gibt die Steuereinheit ein Signal an eine Lampe oder einen Lautsprecher ab. Nach dem Quittieren der in einem der Wagen betätigten Notbremse, wäre es nun wünschenswert, wenn weitere von Reisenden ausgelöste Notbremsungen detektiert werden könnten. Erfindungsgemäss werden dazu die erste und die zweite Ader der Verbindungsleitung durch eine Serieschaltung des Auslöseschalters, eines Lastwiderstands und eines Freischaltkontakts eines Freischalterelais miteinander verbunden, dessen Relaisspule über einen Schaltkontakt des Empfangsrelais mit der Versorgungsspannung verbindbar ist, um den Freischaltkontakt nach der Betätigung des ersten Überbrückungsschalters zu öffnen.

Mit der Betätigung des Überbrückungsventils ist daher die Behandlung der Notbremssituation für den vorliegenden Fall abgeschlossen, weshalb die Messschlaufe mit der ersten und der zweiten Ader der Verbindungsleitung durch Unterbrechung der genannten Serieschaltung, welche den noch immer geschlossenen Auslöseschalter enthält, wieder frei geschaltet werden kann. Nach der Öffnung der Serieschaltung mit dem noch immer geschlossenen Auslöseschalter ist die ursprüngliche Impedanz zwischen der ersten und der zweiten Ader wieder hergestellt, weshalb weitere Notbremsauslösungen bzw. das weitere Betätigen eines Auslöseschalters, gegebenenfalls in einem anderen Reisezugwagen durch die Steuereinheit detektiert und in der oben beschriebenen Weise behandelt werden kann.

Damit eine zu frühe Öffnung der Serieschaltung durch das Öffnen des Freischaltekontakts ausgeschlossen ist, arbeitet das Freischalterelais mit einer zeitlichen Verzögerung, die bedingt, dass die Steuerspannung solange anliegen muss, bis ein geordneter Übergang unabhängig von möglicherweise vorliegenden Störsignalen, gewährleistet ist.

Nach dem Öffnen des Freischaltekontakts bleibt die Serieschaltung unterbrochen, obwohl der Auslöseschalter noch geschlossen ist. Im Trieb-/ oder Steuerwagen kann der Zustand des Auslöseschalters daher nicht mehr festgestellt werden, was für die Signalisierung der betätigten Notbremseinheiten, jedoch von Vorteil wäre. Erfindungsgemäss wird daher parallel zum Freischaltekontakt ein Geschwindigkeitsschalter vorgesehen, der vorzugsweise mittels eines Gleitschutzmoduls geschlossen wird, sobald eine vorgesehene Geschwindigkeit von vorzugsweise 5 km/h unterschritten wird.

Der im UIC Merkblatt 541-5 beschriebene Gleitschutz ist bekanntlich eine Einrichtung an schienengebundenen Fahrzeugen, der dazu dient, einen Schlupf zwischen Rad und Schiene und daraus resultierende Flachstellen an Radsätzen zu vermeiden. Die Gleitschutzeinrichtung erlaubt es, die Drehzahl der Radsätze zu erfassen und somit gleichzeitig die Geschwindigkeit des Fahrzeugs zu erfassen, weshalb die Betätigung des Geschwindigkeitsschalters bei einer gewünschten Geschwindigkeit leicht möglich ist. Sobald die Geschwindigkeit einen eingestellten Schwellwert unterschreitet oder der Personenzug zu einem Halt kommt, wird der Geschwindigkeitsschalter und somit die an den ersten beiden Adern anliegende Serieschaltung mit dem geschlossenen Auslöseschalter wieder geschlossen. Weitere Impedanzänderungen zwischen den beiden ersten Adern können von der Steuereinheit daher wieder detektiert und somit die weiter betätigten Notbremseinheiten (bzw. Notbremskasten) wieder signalisiert werden.

Das Freischalterelais und der von der Gleitschutzeinrichtung gesteuerte Geschwindigkeitsschalter sind vorteilhaft zusammen mit den Mitteln einsetzbar, die der Übertragung des Verschlusssignals über den zweiten Signalpfad dienen, um das Überbrückungsventil wahlweise zu verschliessen. Das Freischalterelais und der von der Gleitschutzeinrichtung gesteuerte Geschwindigkeitsschalter sind jedoch auch vorteilhaft einsetzbar, wenn die Mittel zur Übertragung des Verschlusssignals nicht vorgesehen sind.

Die Erfindung kann in verschiedener Weise realisiert werden. Die beschriebenen Schalteinheiten, insbesondere die ersten und zweiten Überbrückungsschalter können in der Steuereinheit integriert sein.

Nachfolgend wird die Erfindung anhand von Zeichnungen näher erläutert. Dabei zeigt:
- Figur 1: einen Personenzug mit einer darin vorgesehenen erfindungsgemässen Bremsvorrichtung; und
- Figur 2: die Bremsvorrichtung von Figur 1 in einer vorzugsweisen Ausgestaltung;

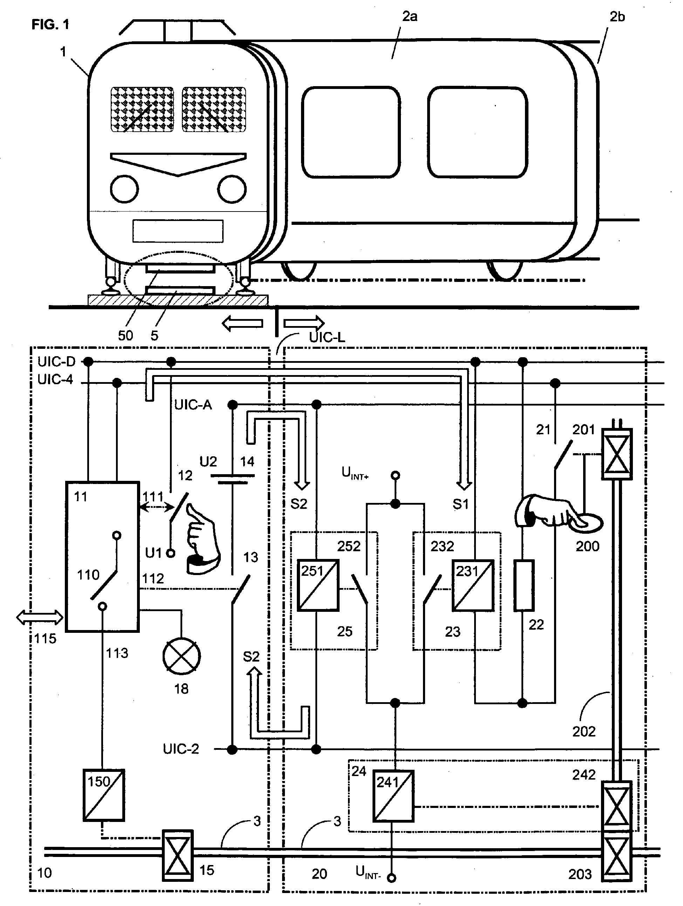

Figur 1 zeigt einen Personenzug mit einem Trieb-/ oder Steuerwagen 1 und mehreren Reisezugwagen 2a, 2b, .... Ferner ist eine zwischen den Geleisen vorzugsweise vorgesehene Kommunikationseinheit 5 bzw. eine Balise gezeigt, über die Daten zu einer Steuereinheit 11 übertragbar sind, die im Trieb-/ oder Steuerwagen 1 vorgesehen ist.

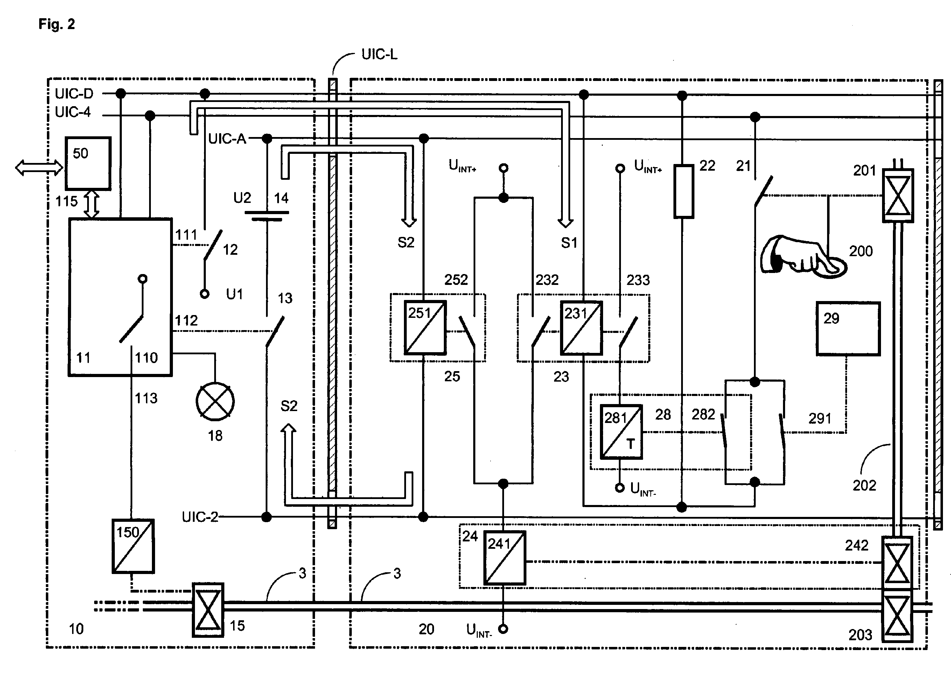

Gezeigt ist ferner eine modular aufgebaute Bremsvorrichtung, die aus einem im Trieb-/ oder Steuerwagen 1 angeordneten Zentralsteuerung 10 und wenigstens einer in einem Reisezugwagen 2a, 2b angeordneten Wagensteuerung 20 besteht. Die genannten Fahrzeuge 1, 2a, 2b sind durch eine aus mehreren Adern bestehende Verbindungsleitung UIC-L miteinander verbunden, die in den Ausgestaltungen der Erfindung von Figur 1 und Figur 2 der in [1] spezifizierten Verbindungsleitung entspricht.

Die Bremsvorrichtung weist eine elektropneumatische Ausrüstung auf, einschliesslich einer Hauptluftleitung 3, über die ein pneumatischer Druck in den Bremszylindern der Bremseinheiten aufbaubar ist, um die beispielsweise federgestützten Bremsen zu lösen (nicht gezeigt, siehe z.B. [3], DE 10 2004 012 100 A1). Durch den Auslass der Druckluft aus der Hauptluftleitung 3 baut die Druckluft in den Bremszylindern auf, wodurch die Bremsen anlegen. Auch Notbremsungen erfolgen durch das Auslassen der Luft aus der Hauptluftleitung 3, wie dies nachstehend beschrieben ist.

Die in einem Reisezugwagen vorgesehene Notbremseinheit weist dazu einen manuell betätigbaren Hebel 200 auf, mittels dessen ein Auslöseventil 201 geöffnet werden kann, das über eine pneumatische Steuerleitung 202 und ein Überbrückungsventil 24 mit einem an die Hauptluftleitung 3 angeschlossenen ersten Notbremsventil 203 verbunden ist. Sofern das Überbrückungsventil 24 geöffnet ist, entweicht die Druckluft nach der Betätigung des Auslöseventils 201. Aufgrund des resultierenden Druckabfalls in der Steuerleitung 202 öffnet nun auch das erste Notbremsventil 203 und lässt die Druckluft aus der Hauptluftleitung 3 entweichen, was die Aktivierung der Bremsen zur Folge hat.

Um eine eingeleitete Notbremsung aufgrund der eingangs beschriebenen Gründe wieder aufheben zu können, wird bei der Betätigung des Hebels 200 nicht nur das Auslöseventil 201 geöffnet, sondern auch ein Auslöseschalter 21 geschlossen, der über einen Lastwiderstand 22 mit einer ersten Ader UIC-D und einer zweiten Ader UIC-4 der Verbindungsleitung UIC-L verbunden ist. Die beiden Adern UIC-D und UIC-4 bilden eine Schlaufe, deren Impedanz von der im Trieb-/ oder Steuerwagen 1 vorgesehenen Steuereinheit 11 überwacht wird. Nach dem Schliessen des Auslöseschalters 21 wird der Lastwiderstand 22 an die Adern UIC-D und UIC-4 angelegt, so dass durch die Steuereinheit 11 eine entsprechende Impedanzänderung festgestellt wird und im Trieb-/ oder Steuerwagen 1 beispielsweise akustisch und optisch an einer Signalleuchte 18 signalisiert werden kann.

Sofern die von einem Reisenden eingeleitete Notbremsung unerwünscht ist, kann der Fahrzeugführer nun einen ersten Überbrückungsschalter 12 betätigen, mittels dessen eine Spannung U1 an die erste Ader UIC-D angelegt wird, an die im Reisezugwagen ein Ende der Relaisspule 231 eines Empfangsrelais 23 angeschlossen ist, deren anderes Ende mit dem geschlossenen Auslöseschalter 21 und somit mit der zweiten Ader UIC-4 verbunden ist. Aufgrund der an die erste Ader UIC-D angelegten Spannung U1 zieht das Empfangsrelais 23 daher an und schliesst einen ersten als Ventilschalter 232 dienenden Relaiskontakt. Durch den ersten Ventilschalter 232 wird eine lokal vorhandene Spannung U_{INT+}, beispielsweise die Spannung der Wagenbatterie, an eine Spule 241 des Überbrückungsventils 24 angelegt, wodurch dessen pneumatisches Verschlussteil 242 verschlossen wird. Der durch Schliessen des ersten Überbrückungsschalters 12 ausgelöste erste Überbrückungsbefehl wird daher über einen ersten Signalpfad S1, nämlich über die erste und zweite Ader UIC-D und UIC-4 zum Überbrückungsventil 24 übertragen.

Nach dem Verschliessen des Überbrückungsventils 24 kann keine Luft mehr aus dem ersten Notbremsventil 203 in die pneumatische Steuerleitung 202 entweichen, weshalb auch das Notbremsventil 203 verschlossen und die eingeleitete Notbremsung aufgehoben bzw. überbrückt wird. Wie eingangs beschrieben, erfolgt durch die eingeleitete Notbremsung jedoch auch eine Temporeduktion oder gar ein Stillstand des Personenzuges in Bereichen, in denen dies unerwünscht ist und zu Gefährdungen führen kann.

Zur Vermeidung dieses Problems weist die Steuereinheit 11 einen zweiten Überbrückungsschalter 13 auf, mittels dessen eine Spannungsquelle U2 über eine dritte Ader UIC-A und eine vierte Ader UIC-2 wahlweise an die Relaisspule 251 eines Überbrückungsrelais 25 angelegt werden kann, dessen Relaiskontakt als zweiter Ventilschalter 252 dient. Durch den zweiten Ventilschalter 252 wird wiederum die lokal vorhandene Spannung U_{INT+} an die Spule 241 des Überbrückungsventils 24 angelegt, wodurch dessen pneumatisches Verschlussteil 242 verschlossen wird. Der durch Schliessen des zweiten Überbrückungsschalters 13 ausgelöste zweite Überbrückungsbefehl bzw. ein Verschlusssignal in Form der Spannung U2 wird daher über einen zweiten Signalpfad S1, nämlich über die dritte und vierte Ader UIC-A und UIC-2 zum Überbrückungsventil 24 übertragen.

Nach dem Verschliessen des Überbrückungsventils 24 kann keine Luft aus dem ersten Notbremsventil 203 in die pneumatische Steuerleitung 202 entweichen, weshalb das Notbremsventil 203 verschlossen bleibt und bei der Betätigung des Auslöseventils 201 durch einen Reisenden nicht geöffnet werden kann. Für Zonen, beispielsweise bei Fahrten ausserhalb der Stationsbereiche, auf Brücken oder in Tunnels, in denen keine Notbremsung auch nur ansatzweise durchgeführt werden soll, kann daher der zweite Überbrückungsschalter 13 gesetzt werden. Vorbehaltlich der nachstehend beschriebenen Massnahmen werden Notbremsungen in diesen Zonen daher vollständig vermieden, jedoch immer dem Triebfahrzeugführer gemeldet.

Bei der Aktivierung der Notbremse durch Betätigen des Hebels 200 wird auch nach dem Setzen des zweiten Überbrückungsschalters 13 der Auslöseschalter 21 geschlossen und der Lastwiderstand 22 der ersten und zweiten Ader UIC-D und UIC-4 zugeschaltet und die resultierende Impedanzänderung von der Steuereinheit 11 detektiert und signalisiert. Diese Signalisierung kann nun entweder durch den Fahrzeugführer oder durch die Steuereinheit 11 selbst behandelt werden. Der Fahrzeugführer kann den ersten Überbrückungsschalter 12 betätigen, um die signalisierte Notbremsanforderung zu quittieren, was der Steuereinheit 11 beispielsweise über den Pfad 111 gemeldet wird. Sofern im befahrenen Streckenbereich, beispielsweise in einem Tunnel generell keine von einem Reisenden eingeleitete Notbremsung durchgeführt werden soll, kann dies in der Steuereinheit 11 programmiert werden. Signalisierte Notbremsanforderungen, die in diesen Zonen auftreten, können durch die Steuereinheit 11 daher automatisch quittiert werden (beispielsweise durch Betätigung des Schalters 12 über den Pfad 111), ohne dass ein Eingreifen des Fahrzeugführers notwendig ist und ohne dass eine Notbremsung eingeleitet wird.

Sofern innerhalb eines Verschlussintervalls, das mit der Signalisierung der Betätigung des Auslöseschalters 21 beginnt, diese Signalisierung durch den Fahrzeugführer nicht quittiert wird und in der Steuereinheit 11 auch keine anderweitigen Instruktionen programmiert sind, so wird durch die Steuereinheit 11 über eine Steuerleitung 113 das im Trieb-/oder Steuerwagen 1 vorgesehene Magnetventil zur Schnellbremsung 15 betätigt, um die Luft aus der Hauptluftleitung 3 entweichen zu lassen und eine Notbremsung einzuleiten.

Wie oben beschrieben wurde, wird bei Betätigung der Notbremse der Auslöseschalter 21 geschlossen und der Lastwiderstand 22 an die erste und zweite Ader UIC-D und UIC-4 angelegt, wonach die Steuereinheit 11 die entsprechende Impedanzänderung detektieren und instruktionsgemäss verwerten kann. Bei der Ausgestaltung der Bremsvorrichtung von Figur 1 bleibt der Auslöseschalter 21 geschlossen und die Impedanzänderung somit erhalten. Weitere Notbremseinleitungen in anderen Wagen können daher nur mit erheblichem Aufwand detektiert werden.

Zur Lösung dieses Problems wird die mit der ersten und der zweiten Ader UIC-D, UIC-4 der Verbindungsleitung UIC-L verbundene Serieschaltung des Auslöseschalters 21 und des Lastwiderstands 22 erfindungsgemäss mit einem Freischaltkontakt 282 eines Freischalterelais 28 ergänzt, dessen Relaisspule 281 über einen zusätzlichen Schaltkontakt 233 des Empfangsrelais 23 mit der Versorgungsspannung U_{INT+}, beispielsweise der Wagenbatterie verbindbar ist, wie dies in Figur 2 gezeigt ist. Nach der Einleitung einer Notbremsung und der anschliessenden Betätigung des ersten Überbrückungsschalters 12 wird durch das in der Folge aktivierte Empfangsrelais 23 nun nicht mehr nur das Überbrückungsventil 24, sondern auch das Freischalterelais 28 angesteuert, um den Freischaltkontakt 282 zu öffnen. Dadurch wird die ursprüngliche Impedanz zwischen den Adern UIC-D und UIC-4 wieder hergestellt, weshalb weitere Notbremsauslösungen bzw. das weitere Betätigen eines Auslöseschalters, gegebenenfalls in einem anderen Reisezugwagen, durch die Steuereinheit 11 in gleicher Weise detektiert und in der oben beschriebenen Weise behandelt werden kann.

Damit eine zu frühe Öffnung der Serieschaltung durch das Öffnen des Freischaltekontakts 282 ausgeschlossen ist, arbeitet das Freischalterelais 28 vorzugsweise mit einer zeitlichen Verzögerung, die bedingt, dass die Steuerspannung solange anliegen muss, bis ein geordneter Übergang unabhängig von möglicherweise vorliegenden Störsignalen, gewährleistet ist.

Nach dem Öffnen des Freischaltekontakts 282 bleibt die Serieschaltung unterbrochen, obwohl der Auslöseschalter 21 noch geschlossen ist. Im Trieb-/ oder Steuerwagen 1 kann der Zustand des Auslöseschalters 21 und somit der Notbremseinheit daher nicht mehr festgestellt werden, was für die Signalisierung der betätigten Notbremseinheiten, hingegen von Vorteil wäre. Erfindungsgemäss ist daher parallel zum Freischaltekontakt 282 ein Geschwindigkeitsschalter 291 vorgesehen, der von einem Gleitschutzmodul 29 geschlossen wird, sobald eine vorgesehene Geschwindigkeit von vorzugsweise 5 km/h unterschritten wird.

Sobald die Geschwindigkeit des Personenzuges den eingestellten Schwellwert unterschreitet, wird der Geschwindigkeitsschalter 291 und somit die an den Adern UIC-D und UIC-4 anliegende Serieschaltung wieder geschlossen. Die entsprechende Impedanzänderung zwischen den Adern UIC-D und UIC-4 kann von der Steuereinheit 11 daher wieder detektiert und somit die betätigten Notbremseinheiten (bzw. Notbremskasten) signalisieren.

Die erfindungsgemässe Bremsvorrichtung wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Ausgestaltungen der Steuereinheit und der Steuer- und Schaltmittel in fachmännischer Weise wählbar. Die ersten beiden Überbrückungsschalter 12 und 13 können direkt in der Steuereinheit 11 integriert sein. In Figur 2 ist ferner eine Kommunikationseinheit 50 gezeigt, über die der Steuereinheit 11 Instruktionen von stationären Balisen 5 (siehe Figur 1) und somit von Leitwerken zuführbar sind, die auch für die Festlegung der Verschlussintervalle verwendbar sind.

Um die Kompatibilität mit konventionellen Wagen zu gewährleisten wird als Verbindungsleitung UIC-L vorzugsweise die in [1] spezifizierte mehradrige Verbindungsleitung gewählt, welche die Wagen des Personenzuges miteinander verbindet. Die dritte Ader UIC-A, über die das Verschlusssignal übertragen wird, ist dabei vorzugsweise die der Stromversorgung von Güterwagen dienende Ader A der neunadrigen UIC-Verbindungsleitung.

Die erste Ader der Verbindungsleitung UIC-L ist vorzugsweise die Ader 4 (ep-Bremse anlegen), die zweite Ader der Verbindungsleitung UIC-L ist vorzugsweise die Ader D (NBÜ-Funktionen), und die vierte Ader der Verbindungsleitung UIC-L ist vorzugsweise die Ader 2 (Rückleitung ep-Bremse und NBÜ) der in [1] spezifizierten mehradrigen Verbindungsleitung. Ein erfindungsgemäss ausgestaltetes Fahrzeug ist daher vollständig kompatibel zu einem gemäss [1] eingerichteten Fahrzeug, wobei durch Nutzung der Ader A der in [1] spezifizierten mehradrigen Verbindungsleitung die Zusatzfunktionalitäten realisierbar sind.

Anstelle der UIC-ep-Steuerleitung, insbesondere bei Systemen, bei denen die UIC-Bestimmungen nicht angewendet werden, kann auch jede andere Art elektrischer Übertragung mit Leitungen oder Funksystemen angewendet werden, welche die Sicherheitsbestimmungen erfüllt.

### Literaturverzeichnis

- [1]: Merkblatt 541-5 des Internationalen Eisenbahnverbands (UIC) vom Dezember 2005 (4. Ausgabe)
- [2]: DE 102 09 913 C1
- [3]: DE 10 2004 012 100 A1

## Patentansprüche

1. Bremsvorrichtung mit einer elektropneumatischen Ausrüstung, einschliesslich einer mit Bremseinheiten gekoppelten Hauptluftleitung (3), für einen Personenzug, der einen mit einer Steuereinheit versehenen Trieb-/ oder Steuerwagen (1) und wenigstens einen Reisezugwagen (2) mit einer Notbremseinheit (200, 201, 202, 203) aufweist, die einen manuell betätigbaren, über elektrische Leitungen (UIC-D, UIC-4) mit der Steuereinheit (11) verbundenen Auslöseschalter (21) und wenigstens ein damit gekoppeltes Auslöseventil (201) aufweist, das mit wenigstens einem an die Hauptluftleitung (3) angeschlossenen ersten Notbremsventil (203) über eine pneumatische Steuerleitung (202) und ein Überbrückungsventil (24) verbunden ist, welches von der Steuereinheit (11) über einen ersten Signalpfad (S1; UIC-D, UIC-4) ansteuerbar ist, so dass es nach der Signalisierung der Betätigung des Auslöseschalters (21), gegebenenfalls auf einer Signaleinheit (18) der Steuereinheit (11), durch Betätigung eines ersten Überbrückungsschalters (12) in der Steuereinheit (11) wahlweise verschliessbar ist, **dadurch gekennzeichnet, dass** das Überbrückungsventil (24) von der mit einem Magnetventil zur Schnellbremsung (15) verbundenen Steuereinheit (11) zusätzlich mittels eines zweiten Überbrückungsschalters (13) über einen zweiten Signalpfad (S2; UIC-A, UIC-2) ansteuerbar ist, so dass das Überbrückungsventil (24) für feste oder variable Verschlussintervalle verschliessbar ist, während derer der Auslöseschalter (21) durch die Steuereinheit (11) überwachbar und das mit der Hauptluftleitung (3) verbundene Magnetventil zur Schnellbremsung (15) aktivierbar ist, falls nach Betätigung des Auslöseschalters (21) nicht innerhalb eines vorgegebenen Intervalls eine Eingabe durch den Fahrzeugführer erfolgt oder falls nicht anderweitige Instruktionen in der Steuereinheit (11) programmiert sind.

2. Bremsvorrichtung nach Anspruch 1, **dadurch gekennzeichnet, dass** über den zweiten Signalpfad (S2; UIC-A, UIC-2) ein der Steuerung des Überbrückungsventils (24) dienendes Verschlusssignal (U2) durchschaltbar ist,
a) das durch manuelle Betätigung des zweiten Überbrückungsschalters (13) der Steuereinheit (11) setzbar ist; und/oder
b) das von der Steuereinheit (11) in Abhängigkeit von vorliegenden, gegebenenfalls programmierten, oder selbst ermittelten Informationen, wie historischen Fahrtinformationen, Zeitinformationen, Positionsdaten und Positionsinstruktionen, setzbar ist; und/oder
c) das von der Steuereinheit (11) in Abhängigkeit von externen Informationen setzbar ist, die gegebenenfalls von stationären Kommunikationseinheiten, wie Balisen (5), empfangen wurden.

3. Bremsvorrichtung nach Anspruch 1 oder 2, **dadurch gekennzeichnet, dass** das Verschlusssignal ausserhalb der Haltebereiche, vorzugsweise in einem Abstand von etwa 100m-200m von den fahrplangemässen Haltepunkten des Personenzuges entfernt, im Bereich eines Tunnels und/oder im Bereich einer Brücke vorzugsweise automatisch setzbar ist.

4. Bremsvorrichtung nach Anspruch 1, 2 oder 3, **dadurch gekennzeichnet, dass** das Überbrückungsventil (24) eine Ventilspule (241) aufweist, die über einen dem ersten Signalpfad (S1; UIC-D, UIC-4) zugeordneten ersten Ventilschalter (232) und über einen dem zweiten Signalpfad (S2; UIC-A, UIC-2) zugeordneten zweiten Ventilschalter (252) mit einer Versorgungsspannung verbindbar ist (U_{INT+}, U_{INT-}) wobei
a) der erste Ventilschalter (232) mittels eines Empfangsrelais (23) betätigbar ist, dessen Relaisspule (231) über eine erste und eine zweite Ader (UIC-4; UIC-D) einer Verbindungsleitung (UIC-L) mittels des ersten Überbrückungsschalters (12) ansteuerbar ist und
b) der zweite Ventilschalter (252) mittels eines Überbrückungsrelais (25) betätigbar ist, dessen Relaisspule über eine dritte und eine vierte Ader (UIC-A; UIC-2) der Verbindungsleitung (UIC-L) mittels des zweiten Überbrückungsschalters (12) ansteuerbar ist.

5. Bremsvorrichtung nach Anspruch 4, **dadurch gekennzeichnet, dass** die Verbindungsleitung (UIC-L) eine gemäss UIC-Merkblatt 541-5 spezifizierte mehradrige Verbindungsleitung ist, welche die Wagen des Personenzuges miteinander verbindet und dass die dritte Ader (UIC-A), über die das Verschlusssignal übertragen wird, die ansonsten der Stromversorgung von Güterwagen dienende Ader A dieser Verbindungsleitung ist.

6. Bremsvorrichtung insbesondere nach Anspruch 4 oder 5, **dadurch gekennzeichnet, dass** die erste und die zweite Ader (UIC-4; UIC-D) der Verbindungsleitung (UIC-L) durch eine Serieschaltung des Auslöseschalters (21) und eines Lastwiderstands (22) miteinander verbunden sind, oder dass die erste und die zweite Ader (UIC-4; UIC-D) der Verbindungsleitung (UIC-L) durch eine Serieschaltung des Auslöseschalters (21), eines Lastwiderstands (22) und eines Freischaltkontakts (282) eines Freischalterelais (28) miteinander verbunden sind, dessen Relaisspule (281) über einen Schaltkontakt (233) des Empfangsrelais (23) mit der Versorgungsspannung (U_{INT+}, U_{INT-}) verbindbar ist, um den Freischaltkontakt (282) nach der Betätigung des ersten Überbrückungsschalters (12) zu öffnen.

7. Bremsvorrichtung nach Anspruch 6, **dadurch gekennzeichnet, dass** das Freischalterelais (28) eine Schaltverzögerung aufweist.

8. Bremsvorrichtung nach Anspruch 6 oder 7, **dadurch gekennzeichnet, dass** parallel zum Freischaltekontakt (282) ein Geschwindigkeitsschalter (291) vorgesehen ist, der von einem Gleitschutzmodul (29) schliessbar ist, sobald eine vorgesehene Geschwindigkeit von vorzugsweise 5 km/h unterschritten wird.

9. Bremsvorrichtung nach einem der Ansprüche 1-8, **dadurch gekennzeichnet, dass** die Steuereinheit (11) mit einem Kommunikationsmodul (50) verbunden ist, über das Daten von externen Kommunikationseinheiten (5), wie stationären Balisen (5) empfangen werden können.

10. Bremsvorrichtung nach einem der Ansprüche 1-9, **dadurch gekennzeichnet, dass** der erste und der zweite Überbrückungsschalter (12, 13) manuell betätigbar oder in die Steuereinheit (11) integriert sind.

## Claims

1. Braking device with an electro-pneumatic equipment, including a main air line (3) that is coupled with brake units, for a passenger train, which comprises a rail car or a control car (1) that is provided with a control unit, and at least one passenger car (2) that is provided with an emergency brake unit (200, 201, 202, 203), which comprises a manual operable trigger switch (21) that is connected over electrical lines (UIC-D, UIC-4) with the control unit (11) and at least a tripping valve (201) coupled thereto, which is connected via a pneumatic control line (202) and a bypass valve (24) to at least one emergency brake valve (203) that is connected to the main air line (3), which bypass valve (24) is controllable by the control unit (11) via a first signal path (S1; UIC-D, UIC-4), so that, after signalling of the actuation of the trigger switch (21) if appropriate on a signal unit (18) of the control unit (11), it is selectively lockable by actuation of a first bypass switch (12) in the control unit (11), **characterised in that** the bypass valve (24) is controllable in addition by the control unit (11), which is connected with a solenoid valve for rapid stop (15), by means of a second bypass switch (13) via a second signal path (S2; UIC-A, UIC-2), so that the bypass valve (24) is lockable for fixed or variable lock intervals, during which the trigger switch (21) can be monitored by the control unit (11) and the solenoid valve for rapid stop (15), which is connected to the main air line (3), can be activated, if after actuation of the trigger switch (21) not within a predetermined interval an input by the vehicle operator is made or if other instructions are not programmed in the control unit (11).

2. Braking device according to claim 1, **characterised in that** a lock signal (U2) serving for the control of the bypass valve (24) can be transferred via the second signal path (S2; UIC-A, UIC-2), which lock signal (U2)
a) is settable by manual operation of the second bypass switch (13) of the control unit (11); and/or
b) is settable by the control unit (11) in response to present, if necessary programmed or automatically gathered information, like historical travel information, time information, position data and position instructions,; and/or
c) is settable by the control unit (11) in response to external information, which if appropriate was received from stationary communication units, like transponders (5).

3. Braking device according to claim 1 or 2, **characterised in that** the lock signal is preferably automatically settable outside of the stop ranges, preferably in a distance of 100m-200m from the scheduled stop points of the passenger train, in the range of a tunnel and/or in the range of a bridge.

4. Braking device according to claim 1, 2 or 3, **characterised in that** the bypass valve (24) comprises a valve coil (241), which is connectable to a supply voltage (UINT+, UINT) via a first valve switch (232) associated with the first signal path (S1; UIC-D, UIC-4) and via a second valve switch (252) associated with the second signal path (S2; UIC-A, UIC-2), wherein
a) the first valve switch (232) can be actuated by means of a receiver relais (23), whose relay coil (231) can be driven via a first and a second wire (UIC-4; UIC-D) of a connecting line (UIC-L) by means of the first bypass switch (12), and
b) the second valve switch (252) can be actuated by means of a bypass relay (25), whose relay coil can be driven via a third and a fourth wire (UIC-A; UIC-2) of the connecting line (UIC-L) by means of the second bypass switch (12).

5. Braking device according to claim 4, **characterised in that** the connecting line (UIC-L) is multi-core connecting line, which is specified in accordance with UIC-bulletin 541-5 and which interconnects the carriages of the passenger train and that the third wire (UIC-A), over which the lock signal is transmitted, is the wire A of this connecting line, which serves otherwise for the power supply of freight cars.

6. Braking device in particular according to claim 4 or 5, **characterised in that** first and the second wire (UIC-4; UIC-D) of the connecting line (UIC-L) are connected with one another by the trigger switch (21) and a load resistance (22), which are connected in series, or
that first and the second wire (UIC-4; UIC-D) of the connecting line (UIC-L) are connected with one another by the trigger switch (21), a load resistance (22) and a de-energising contact (282) of a de-energising relay (28), which are connected in series, wherein the relay coil (281) of the de-energising relay (28) is connectable over a switch contact (233) of the receiver relais (23) with the supply voltage (UINT+, UINT), in order to open the de-energising contact (282) after the first bypass switch (12) has been actuated.

7. Braking device according to claim 6, **characterised in that** the de-energising relay (28) exhibits a switching delay.

8. Braking device according to claim 6 or 7, **characterised in that** parallel to the de-energising contact (282) a speed switch (291) provided is, which is closable by a sliding protection module (29), as soon as the speed has fallen below a predetermined speed of preferably 5 km/h.

9. Braking device after one of the claims 1-8, **characterised in that** the control unit (11) is connected to a communication module (50), over which data from external communication units (5), such as stationary transponders (5), can be received.

10. Braking device after one of the claims 1-9, **characterised in that** the first and the second bypass switch (12, 13) can be a actuated manual or are integrated into the control unit (11).

## Revendications

1. Dispositif de freinage avec un équipement électropneumatique, y compris une conduite d'air principale (3) accouplée des unités de freinage, pour un train de passager qui présente un wagon de commande ou motrice (1) muni d'une unité de commande et au moins un wagon de train de voyageur (2) avec une unité de freinage d'urgence (200, 201, 202, 203), qui présente un interrupteur de déclenchement (21) relié à l'unité de commande (11) par des lignes électriques (UIC-D, UIC-4) (11) et actionnable manuellement, et au moins une valve de déclenchement accouplée (201) à l'interrupteur, vanne qui est reliée à au moins une première valve de freinage d'urgence (203) raccordée à la conduite principale d'air (3) par une ligne de commande pneumatique (202) et une valve de shuntage (24) qui peut être commandée par un premier chemin de signaux (S1; UIC-D, UIC-4) par l'unité de commande (11), de sorte qu'elle peut être fermée au choix après la signalisation de l'actionnement de l'interrupteur de déclenchement (21), le cas échéant sur une unité de signal (18) de l'unité de commande (11), par actionnement d'un premier interrupteur de shuntage (12) dans l'unité de commande (11), **caractérisé en ce que** la valve de shuntage (24) peut être commandée par l'unité de commande (11) reliée à une électrovalve pour un freinage rapide (15) en supplément au moyen d'un second interrupteur de shuntage (13) par un second chemin de signaux (S2; UIC-A, UIC-2) de sorte que la valve de shuntage (24) peut être fermée pour des intervalles de fermeture fixes ou variables, pendant lesquels l'interrupteur de déclenchement (21) peut être surveillé par l'unité de commande (11) et l'électrovalve reliée à la conduite d'air principale (3) est activable pour un freinage rapide (15), si après l'actionnement de l'interrupteur de déclenchement (21) pas dans un intervalle prédéterminé, une entrée s'effectue par le conducteur du véhicule ou si aucune autre instruction n'est programmée dans l'unité de commande (11).

2. Dispositif de freinage selon la revendication 1, **caractérisé en ce qu'**un signal de fermeture (U2) servant à la commande de la valve de shuntage (24) peut être transmis par le second chemin de signaux (S2; UIC-A, UIC-2), le signal de fermeture (U2)
a) peut être placé par actionnement manuel du second interrupteur de shuntage (13) de l'unité de commande (11); et/ou
b) peut être placé par l'unité de commande (11) en fonction d'informations existantes, éventuellement programmées ou autodéterminées, telles comme des informations de route historique, des informations d'horaires, des données de position et des instructions de position; et/ou
c) peut être placé par l'unité de commande (11) en fonction d'informations externes qui ont été reçues le cas échéant par des unités de communication telles que des balises (5).

3. Dispositif de freinage selon la revendication 1 ou 2, **caractérisé en ce que** le signal de fermeture peut être placé de préférence automatiquement à l'extérieur des zones d'arrêt de préférence à une distance de 100 à 200 m des points d'arrêts planifiés du train de personnes, dans la zone d'un tunnel et/ou dans la zone d'un pont.

4. Dispositif de freinage selon la revendication 1, 2 ou 3 **caractérisé en ce que** la valve de shuntage (24) présente une bobine de valve (241) qui peut être reliée par un première interrupteur de valve (232) associé au premier chemin de signaux (S1; UIC-D, UIC-4) et par un second interrupteur de valve (252) associé au second chemin de signaux (S2; UIC-A, UIC-2) à une voltage d'alimentation (U_{INT+}, U_{INT-}),
a) le premier interrupteur de valve (232) est actionnable au moyen d'un relais de réception (23) dont la bobine de relais (231) est actionnable par un premier fil et un second fil (UIC-4;UIC-D) d'une ligne de connexion (UIC-L) au moyen du premier interrupteur de shuntage (12) et
b) le second interrupteur de valve (232) est actionnable au moyen d'un relais de réception (25) dont la bobine de relais est actionnable par un troisième fil et un quatrième fil (UIC-A;UIC-2) de la ligne de connexion (UIC-L) au moyen du second interrupteur de shuntage (12).

5. Dispositif de freinage selon la revendication 4, **caractérisé en ce que** la ligne de connexion (UIC-L) est une ligne de connexion multifilaire spécifiée selon la bulletin technique UIC-L 541-5, qui relie les wagons du trains de passagers entre eux et **en ce que** le troisième fil (UIC-A) par lequel est transmis le signal de fermeture est le fil A de cette ligne de connexion servant normalement à l'alimentation électrique de wagons de marchandises.

6. Dispositif de freinage en particulier selon la revendication 4 ou 5, **caractérisé en ce que** les premiers et les seconds fils (UIC-4; UIC-D) de la ligne de connexion (UIC-L) sont reliés entre eux par un circuit en série de l'interrupteur de déclenchement (21) et une résistance de charge (22), ou **en ce que** les premiers et les seconds fils (UIC-4; UIC-D) de la ligne de connexion (UIC-L) sont reliés entre eux par un circuit en série de l'interrupteur de déclenchement (21), une résistance de charge (22) et un contact de libération (282) d'un relais de libération (28), dont la bobine de relais (281) peut être reliée par un contact de commutation (233) du relais de réception (23) à la voltage d'alimentation (U_{INT+}, U_{INT}-) pour ouvrir le contact de libération (282) après l'actionnement de l'interrupteur de shuntage (12).

7. Dispositif de freinage selon la revendication 6, **caractérisé en ce que** le relais de libération (28) présente un retard de commutation.

8. Dispositif de freinage selon la revendication 6 ou 7, **caractérisé en ce que** parallèlement au contact de libération (282), il est prévu un interrupteur de vitesse (291) qui peut être fermé par un module antidérapant (29) dès qu'une vitesse prévue de préférence 5 km/h est dépassée.

9. Dispositif de freinage selon l'une des revendications 1 à 8, **caractérisé en ce que** l'unité de commande (11) est reliée à un module de communication (50) permettant de recevoir des données provenant d'unités de communication externes (5) telles que des balises stationnaires (5).

10. Dispositif de freinage selon l'une des revendications 1 à 9, **caractérisé en ce que** le premier et le second interrupteurs de shuntage (12, 13) sont actionnables manuellement ou sont intégrés dans l'unité de commande (11).
